# EUROPEAN PATENT SPECIFICATION

(11) **EP 2 882 157 B1**
(45) Date of publication and mention of the grant of the patent: **08.08.2018**
(21) Application number: 13826262.1
(22) Date of filing: 26.06.2013
(51) Int. Cl.: H04L 29/06, H04L 29/12, H04W 12/06

(54) **NETWORK ACCESSING METHOD, APPLICATION SERVER AND SYSTEM**
NETZWERKZUGANGSVERFAHREN, ANWENDUNGSSERVER UND SYSTEM
PROCÉDÉ D'ACCÈS À UN RÉSEAU, SERVEUR D'APPLICATIONS ET SYSTÈME

(30) Priority: 30.07.2012 CN 201210266738
(43) Date of publication of application: 10.06.2015
(73) Proprietor: BEIJING WANGMI ONLINE NETWORK CO., LTD., Chaoyang District Beijing Beijing 100011 (CN)
(72) Inventor: YANG, Lixin, Beijing 100011 (CN); TIAN, Ye, Beijing 100011 (CN)
(74) Representative: Walkenhorst, Andreas
(86) International application number: PCT/CN2013/077971
(87) International publication number: WO 2014/019427

(56) References cited:
- CN-A- 101 369 893
- CN-A- 102 420 819
- CN-A- 102 420 819
- CN-A- 102 843 357
- US-A- 5 923 842
- US-A1- 2008 168 542

## Description

### FIELD OF THE INVENTION

The present invention relates to the technical field of network communications, and in particular, to a method, an application server and a system for network access.

### BACKGROUND OF THE INVENTION

Openness is the most basic advantage and the original attribute of Internet, but with the development of different website technologies and the respective commercial consideration thereof, obstacles exist in the interconnection and intercommunication of the Internet. As required by management, each network requires that when a user accesses via a terminal equipment, the user can only browse the network content after registration, or only a small amount of content is accessible to the user, and when the user wants to access more contents, it requires the user to register. For example, if a user wants to browse a weblog on a certain website, the user must have a mailbox account, then create a password, fill in the personal information and input the real name and ID card number, and then the website sends an authentication mail to the registered mailbox, and finally the account is activated, thereby the user can log on and browse the website. For most websites, preparation for accessing the website must be done via such a heavy and complicated process, including real-name authentication. Additionally, when a user uses a mobile terminal, for example, a mobile phone, it will be more inconvenient to fill in the registration information on such mobile terminals; moreover, a user that browses the web via a mobile terminal often uses the fragmentary time to browse the web in real time, and such a user usually will not temporarily register on a website to be accessed.

As reported by the IDC industry of China, the number of websites in China has reached 2,300 thousand. Facing such a large number of websites, most users usually feel unable to select from various websites that require registration, thus it will be inconvenient. Even if a user has registered, a problem of management may be encountered, for example, the password is forgotten, and registration is repeated, etc. For easily remembering the registration information, many users often use the same password when registering on different websites. As a result, when the registration information on one website is leaked out, the registration information on all websites will be leaked out correspondingly, so that a greater hidden danger will be caused to the security of the personal information of the user, for example, the event that the passwords of the 6,000 thousand users of CSDN website are leaked out, and the event that the passwords of the users of Tianya website are leaked out, etc.; however, if a user set different passwords for different websites, it will be more inconvenient for the user to remember and manage the registration information.

The inventors find during the study on the prior art that, it is inadvisable that the number of the accounts and passwords managed by each user exceeds about 5. As directed to the above requirement, the Internet staff have been seeking for a way for network interconnection and intercommunication; however, most solutions in the prior art are made in view of the access protocol and authorization of the network; that is, it requires that the platform of each website should open its standard interface, and interconnection and intercommunication can only be performed after authorization. However, because each website has a selectivity for the intercommunication objects, for example, Tianya community only allows users having Sina weblog accounts or QQ accounts to log on, after a user logs on a website and is authorized in the above authorization mode, the user is still required to fill in a series of contents to perfect the personal information, thus inconvenience will again be brought to the user; moreover, because is a partially-authorized intercommunication, when a user logs on and accesses most websites, the user is still required to register endlessly. Additionally, on some open-authorized websites, a one-key sharing function will be usually set. For example, when a user browses an article on website A and wants to share it with others, the user may click "sharing to website B", and after clicking, it jumps to website B, and an input box pops up on website B, and the user can only realize the sharing function by inputting the account and password on website B. At this time, if the user has not a registered account on website B, the user must register; otherwise, the one-key sharing function cannot be realized. Thus it may be known that, in the existing open interface and authorization mode, the interconnection and intercommunication between each website still cannot be realized, and there still exists a barrier for interconnection and intercommunication.

There exists another mode in the prior art, for example, an account management plugin is opened on 360 Browser, when a user runs the 360 Browser, the accounts and passwords registered by the user on each website may be managed by installing this plugin. That is, the web address, account and password of a website to be managed, which are input by the user, are recorded by the plugin, and after the user logs on the plugin, the user may select to use which account and browse which website, and the 360 Browser open the corresponding website page according to user selection; moreover, the user may select a general-purpose account information, and when the user needs to turn to a new website and register, the plugin may help the user to fill in the general-purpose account information; however, the password, mailbox, identity authentication information and the like, which need to be filled in during registration, still need to be manually accomplished by the user.

In conclusion, in the prior art, when a user wants to access a plurality of networks, the user is required to register on the different networks respectively, thus the number of accounts and passwords to be managed by the user will be large, and because the user is required to register time after time when accessing different networks, the operation will be fussy, and the user experience will be poor; although various modes have been employed in the prior art to realize the interconnection and intercommunication between networks, it has been proved by facts that, no matter a general-purpose identity or an account password management is employed, the essential problem of real interconnection and intercommunication between Internet websites, which has puzzled the users for a long time, cannot be solved.

The document US 5923842, 13th July 1999 (1999-07-13), discloses a method and apparatus for simultaneously providing anonymous user login for multiple users.

### SUMMARY OF THE INVENTION

The embodiments of the invention provide a method, an application server and a system for network access, thereby solving the problem of the prior art that it is difficult to realize interconnection and intercommunication between networks because it requires to register time after time when accessing different networks.

In order to solve the above technical problem, the embodiments of the invention disclose the following technical solutions.

A method for network access, comprising:
receiving a network address of a network to be accessed provided by a user via a client;
obtaining a temporary account information of the network to be accessed corresponding to the network address according to the network address;
logging on the network to be accessed via the temporary account information; and
feeding the network page information after logging on the network to be accessed back to the client.

An application server for network access, comprising:
a receiving unit, configured for receiving a network address of a network to be accessed provided by a user via a client;
an obtaining unit, configured for obtaining a temporary account information of the network to be accessed corresponding to the network address according to the network address received by the receiving unit;
a logon unit, configured for logging on the network to be accessed via the temporary account information obtained by the obtaining unit; and
a feedback unit, configured for feeding a network page information after the logon unit logs on the network to be accessed back to the client.

A system for network access, which comprises a client and an application server, wherein:
the client is configured for providing a network address of a network to be accessed by a user to the application server; and
the application server is configured for obtaining a temporary account information of the network to be accessed corresponding to the network address according to the network address, logging on the network to be accessed via the temporary account information, and feeding a network page information after logging on the network to be accessed back to the client.

In the embodiments of the invention, the application server receives the network address of a network to be accessed provided by a user via a client, obtains the temporary account information of the network to be accessed corresponding to the network address, logs on the network to be accessed via the temporary account information, and feeds the network page information after logging on the network to be accessed back to the client. In the embodiments of the invention, when a user accesses a network, on which the user is not registered, via a client, because the application server may obtain the temporary account information of the network to be accessed according to the network address, the application server may log on the network to be accessed in place of the user and feed back the network page information after logging on to the client, thereby it may be realized that a user accesses a network without registration; especially for a user that uses a mobile terminal, for example, a mobile phone and the like, the user may access the network via the mobile phone without the need to register, thereby avoiding the inconvenience of registration on a mobile phone; in comparison with the prior art, because a user does not need to register time after time when accessing different networks, user operation is simplified, and user experience is improved. For users that originally do not want to register on the network, the website will lose the network traffic brought by this part of users. However, by employing the embodiments of the invention, user may access the network without the need to register, thereby the network traffic of the website may be improved greatly, so that the website will not lose this part of users, and the barrier on the Internet will also be lowered correspondingly.

### BRIEF DESCRIPTION OF THE DRAWINGS

In order to more clearly illustrate the technical solutions of the embodiments of the invention or of the prior art, the drawings needed in the description of the embodiments or the prior art will be briefly introduced below. Apparently, other drawings may also be obtained by one of ordinary skills in the art according to these drawings without creative work.
Fig.1 is a flow chart of a first embodiment of the method for network access according to the invention;
Fig. 2 is a flow chart of a second embodiment of the method for network access according to the invention;
Fig. 3 is a flow chart of a third embodiment of the method for network access according to the invention;
Fig. 4 is a block diagram of a first embodiment of the application server for network access according to the invention;
Fig. 5 is a block diagram of a second embodiment of the application server for network access according to the invention;
Fig. 6 is a block diagram of a third embodiment of the application server for network access according to the invention;
Fig. 7 is a block diagram of a first embodiment of the system for network access according to the invention;
Fig. 8 is a block diagram of a second embodiment of a system for network access according to the invention.

### DETAILED DESCRIPTION OF THE EMBODIMENTS

The following embodiments of the invention provide a method, an application server and a system for network access.

In order to make one skilled in the art better understand the technical solutions of the embodiments of the invention and to make the above objects, characteristics and advantages of the embodiments of the invention more apparent, the technical solutions in the embodiments of the invention will be further illustrated in detail in conjunction with the drawings.

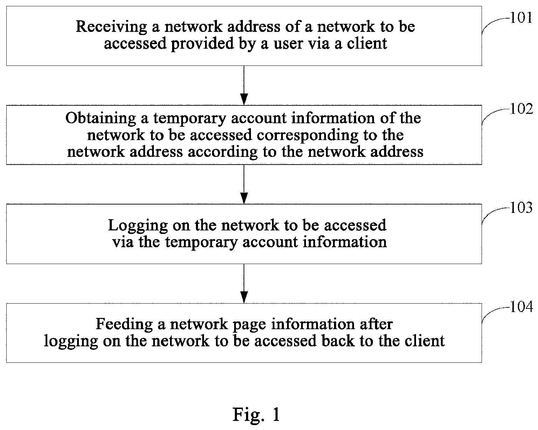

Referring to Fig. 1, it is a flow chart of a first embodiment of the method for network access according to the invention.

Step 101: receiving a network address of a network to be accessed provided by a user via a client.

In this embodiment, the subject of execution may be an application server, that is, an application server receives the network address of a network to be accessed provided by a user via a client, wherein the network address is usually a Universal Resource Locator (URL) address that is input. The user may register on the application server via the client in advance, the application server saves the user name and the password of the user, and after the user logs on the application server via the client, the application server may provide a service for network access to the user. For example, the application server may return an interface for network access to the user, an address bar input box and an access button may be included in the interface, and the user may input the network address of a network to be accessed in the address bar input box and transmit the network address of the network to be accessed to the application server via the client by clicking the access button.

Step 102: obtaining a temporary account information of the network to be accessed corresponding to the network address according to the network address.

In this embodiment, a correspondence relationship between the temporary account information of each network registered in advance and the network domain name of each network may be saved by the application server, or, the correspondence relationship between the temporary account information of each network registered in advance and the network domain name of each network may be saved by a specialized storage server. Wherein, the number of the temporary account informations of each network may be one or more, and each temporary account information may include a temporary user name and a temporary password for logging on the network. The temporary account informations of each network may be registered by the provider of the application server in a manual mode.

After receiving the network address of a network to be accessed provided by a user via a client, the network domain name of the network to be accessed may be resolved from the network address, then the temporary account information corresponding to the resolved network domain name may be looked up in the correspondence relationships saved, wherein, if the application server itself saves the above correspondence relationships, the application server may directly look up the correspondence relationships saved, and if the storage server saves the above correspondence relationships, the application server may look up the correspondence relationships stored on the storage server by communicating with the storage server.

For example, the network address input by the user via the client is www.123.cn, and the network domain name obtained after resolving the network address will be 123.cn, wherein this network domain name is a short domain name, and the temporary account information corresponding to 123.cn for logging on www.123.cn may be obtained by looking up the correspondence relationships saved in advance according to the network domain name 123.cn.

Step 103: logging on the network to be accessed via the temporary account information.

Wherein, the application server may write the temporary user name and the temporary password contained in the temporary account information into the corresponding fields on the logon interface of the network to be accessed, and after the network to be accessed confirms that logon is successful according to the temporary account information written in, it returns the network page information of the network to be accessed to the application server.

Step 104: feeding the network page information after logging on the network to be accessed back to the client.

It may be seen from the above embodiment that, when a user accesses a network, on which the user is not registered, via a client, because the application server may obtain the temporary account information of the network to be accessed according to the network address, the application server may log on the network to be accessed in place of the user and feed back the network page information after logging on to the client, thereby it may be realized that a user accesses a network without registration; in comparison with the prior art, because a user does not need to register time after time when accessing different networks, user operation is simplified, and user experience is improved.

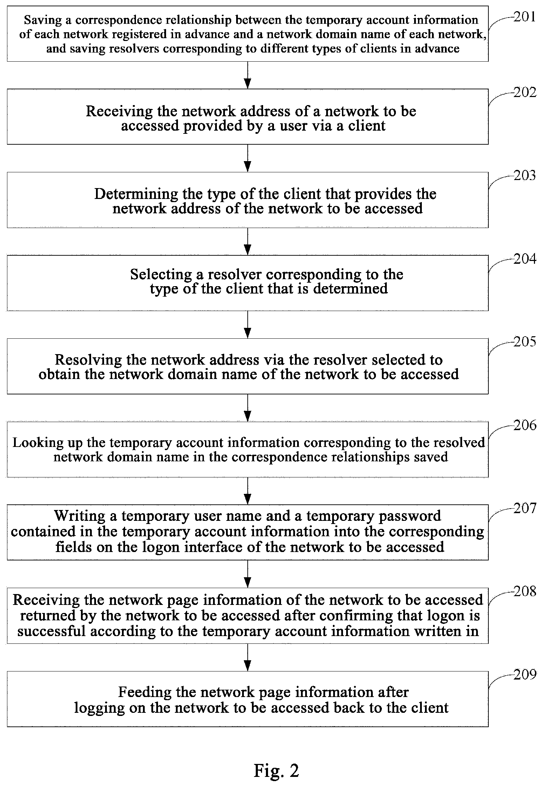

Referring to Fig. 2, it is a flow chart of a second embodiment of the method for network access according to the invention.

Step 201: saving a correspondence relationship between the temporary account information of each network registered in advance and the network domain name of each network, and saving resolvers corresponding to different types of clients in advance.

In this embodiment, the subject of execution may be an application server, and different types of clients mainly refer to clients that employ different operating systems and may include: a PC client that employs a WINDOWS operating system, a mobile phone client that employs an ANDROID operating system and a mobile phone client that employs an iOS operating system (developed by Apple Inc.), etc. due to corresponding to different types of clients, and the network addresses provided by different types of clients needs to be resolved by different resolvers, thus resolvers corresponding to different types of clients are further saved in this embodiment. Table 1 below shows examples of resolvers corresponding to different types of clients:

**Table 1**

| | |
|---|---|
| PC client that employs a WINDOWS operating system | Resolver 1 |
| Mobile phone client that employs an ANDROID operating system | Resolver 2 |
| Mobile phone client that employs an iOS operating system | Resolver 3 |

In this embodiment, a correspondence relationship between the temporary account information of each network registered in advance and the network domain name of each network may be saved by the application server, or, the correspondence relationship between the temporary account information of each network registered in advance and the network domain name of each network may be saved by a specialized storage server. Wherein, the number of the temporary account informations of each network may be one or more, and each temporary account information may include a temporary user name and a temporary password for logging on the network. The temporary account informations of each network may be registered by the provider of the application server in a manual mode.

In this embodiment, it may further search for a newly added network at a preset time interval, obtain the temporary account information registered on the newly added network, and save a correspondence relationship between the temporary account information registered on the newly added network and the network domain name of the newly added network. By the above network searching function, the number of networks accessible to the application server may be increased continuously, and the experience of users to access various networks via an application server without the need to register may be improved.

Step 202: receiving the network address of a network to be accessed provided by a user via a client.

The user may register on the application server via the client in advance, the application server saves the user name and the password of the user, and after the user logs on the application server via the client, the application server may provide a service for network access to the user. For example, the application server may return an interface for network access to the user, which may include an address bar input box and an access button, and the user may input the network address of a network to be accessed in the address bar input box and transmit the network address of the network to be accessed to the application server via the client by clicking the access button. In this embodiment, the network address is usually a URL address that is input.

Step 203: determining the type of the client that provides the network address of the network to be accessed.

For example, when a user provides a network address via a PC client, the application server may determine, after receiving the network address, that the client is a PC client that employs a WINDOWS operating system.

Step 204: selecting a resolver corresponding to the type of the client that is determined.

A corresponding resolver is looked up according to the type of the client that is determined in accordance with the resolvers corresponding to different types of clients that are saved in advance. For example, it may be known in conjunction with the above Table 1 that, if a user provides a network address via a PC client that employs a WINDOWS operating system, Resolver 1 will be employed to resolve the network address, if a user provides a network address via a mobile phone client that employs an ANDROID operating system, Resolver 2 will be employed to resolve the network address, and if a user provides a network address via a mobile phone client that employs an iOS operating system, Resolver 3 will be employed to resolve the network address.

Step 205: resolving the network address via the resolver selected to obtain the network domain name of the network to be accessed.

In this embodiment, after a suitable resolver is selected, the network address is resolved via the resolver to obtain a network domain name, which usually refers to the short domain name of a network to be accessed. For example, the network address input by the user via the client is www.123.cn, and the network domain name obtained after resolving the network address will be 123.cn.

Step 206: looking up the temporary account information corresponding to the resolved network domain name in the correspondence relationships saved.

Wherein, if the application server itself saves the above correspondence relationships, the application server may directly look up the correspondence relationships saved, and if the storage server saves the above correspondence relationships, the application server may look up the correspondence relationships stored on the storage server by communicating with the storage server. For example, the network domain name obtained in Step 205 after resolving the network address is 123.cn, and the temporary account information corresponding to 123.cn for logging on www.123.cn may be obtained by looking up the correspondence relationships saved in advance according to the network domain name 123.cn.

Step 207: writing the temporary user name and the temporary password contained in the temporary account information into the corresponding fields on the logon interface of the network to be accessed.

Usually, the corresponding fields on the logon interface of the network to be accessed include a user name field and a password field. In this embodiment, the application server may employ the mouse and keyboard of the prior art to simulate the following operations, the temporary user name in the temporary account information is input to the user name field according to a network protocol, and the temporary password is input to the password field.

Step 208: receiving network page informations of the network to be accessed returned by the network to be accessed after confirming that logon is successful according to the temporary account information written in.

After the application server successfully logs on the network to be accessed according to the temporary account information that is input, a successful logon information and the network page information of the network to be accessed may be feed back from the network to be accessed to the application server.

Step 209: feeding the network page information after logging on the network to be accessed back to the client.

It may be seen from the above embodiment that, when a user accesses a network, on which the user is not registered, via a client, because the application server may obtain the temporary account information of the network to be accessed according to the network address, the application server may log on the network to be accessed in place of the user and feed back the network page information after logging on to the client, thereby it may be realized that a user accesses a network without registration; in comparison with the prior art, because a user does not need to register time after time when accessing different networks, user operation is simplified, and user experience is improved.

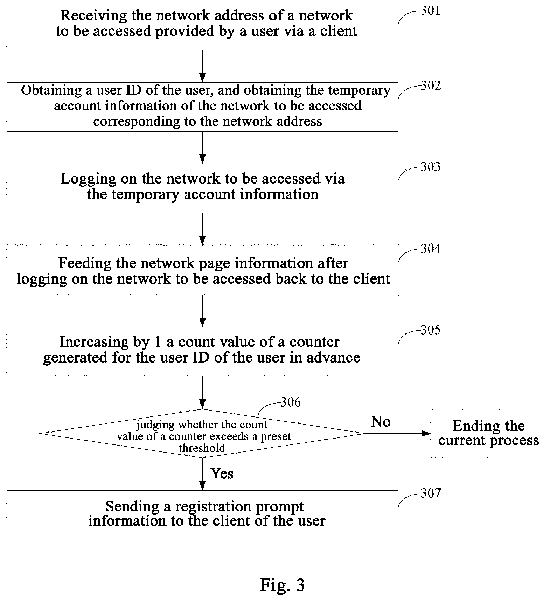

Referring to Fig. 3, it is a flow chart of a third embodiment of the method for network access according to the invention.

Step 301: receiving the network address of a network to be accessed provided by a user via a client.

In this embodiment, the subject of execution may be an application server, that is, an application server receives the network address of a network to be accessed provided by a user via a client, wherein the network address is usually a URL address that is input. The user may register on the application server via the client in advance, the application server saves the user name and the password of the user, and after the user logs on the application server via the client, the application server may provide a service for network access to the user. For example, the application server may return an interface for network access to the user, which may include an address bar input box and an access button, and the user may input the network address of a network to be accessed in the address bar input box and transmit the network address of the network to be accessed to the application server via the client by clicking the access button.

Step 302: obtaining the user ID of the user, and obtaining the temporary account information of the network to be accessed corresponding to the network address.

In this embodiment, after a user logs on an application server via a client, the application server may obtain the user ID of the user, wherein each user ID may uniquely identify a user.

In this embodiment, a correspondence relationship between the temporary account information of each network registered in advance and the network domain name of each network may be saved by the application server, or, the correspondence relationship between the temporary account information of each network registered in advance and the network domain name of each network may be saved by a specialized storage server. Wherein, the number of the temporary account informations of each network may be one or more, and each temporary account information may include a temporary user name and a temporary password for logging on the network. The temporary account information of each network may be registered by the provider of the application server in a manual mode.

After receiving the network address of a network to be accessed provided by a user via a client, the network domain name of the network to be accessed may be resolved from the network address, then the temporary account information corresponding to the resolved network domain name may be looked up in the correspondence relationships saved, wherein, if the application server itself saves the above correspondence relationships, the application server may directly look up the correspondence relationships saved, and if the storage server saves the above correspondence relationships, the application server may look up the correspondence relationships stored on the storage server by communicating with the storage server.

Step 303: logging on the network to be accessed via the temporary account information.

Wherein, the application server may write the temporary user name and the temporary password contained in the temporary account information into the corresponding fields on the logon interface of the network to be accessed, and after the network to be accessed confirms that logon is successful according to the temporary account information written in, the network page information of the network to be accessed is returned to the application server.

Step 304: feeding the network page information after logging on the network to be accessed back to the client.

Step 305: increasing by 1 the count value of a counter generated for the user ID of the user in advance.

In this embodiment, a user may browse a network to be accessed via an application server without the need to register. However, after the user accesses the one and the same network via the application server time after time, the user may be prompted to register on the network to perform other operations than browsing on the network. In order to realize the above prompting function, the application server may generate a counter for each user ID in advance, and the number of times a user accesses the one and the same network may be recorded by the counter.

Step 306: determining whether the count value of a counter exceeds a preset threshold, if yes, turning to Step 307; otherwise, ending the current process.

Step 307: sending a registration prompt information to the client of the user, and ending the current process.

After the count value of a counter exceeds the preset threshold, the application server may send a registration prompt information to the client of the user. The preset threshold may be set flexibly, for example, it is set as "5".

It may be seen from the above embodiment that, when a user accesses a network, on which the user is not registered, via a client, because the application server may obtain the temporary account information of the network to be accessed according to the network address, the application server may log on the network to be accessed in place of the user and feed back the network page information after logging on to the client, thereby it may be realized that a user accesses a network without registration; in comparison with the prior art, because a user does not need to register time after time when accessing different networks, user operation is simplified, and user experience is improved.

Corresponding to the embodiment of the method for network access according to the invention, the invention further provides the embodiments of a system and an application server for network access.

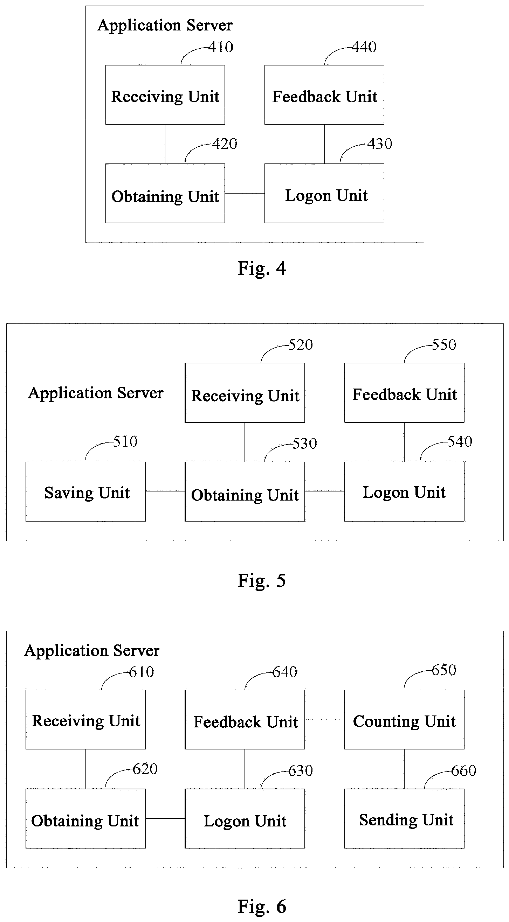

Referring to Fig. 4, it is a block diagram of a first embodiment of the application server for network access according to the invention.

The application server includes: a receiving unit 410, an obtaining unit 420, a logon unit 430 and a feedback unit 440.

Wherein, the receiving unit 410 is configured for receiving the network address of a network to be accessed provided by a user via a client;
the obtaining unit 420 is configured for obtaining the temporary account information of the network to be accessed corresponding to the network address according to the network address received by the receiving unit;
the logon unit 430 is configured for logging on the network to be accessed via the temporary account information obtained by the obtaining unit; and
the feedback unit 440 is configured for feeding the network page information after the logon unit logs on the network to be accessed back to the client.

Referring to Fig. 5, it is a block diagram of a second embodiment of the application server for network access according to the invention.

The application server includes: a saving unit 510, a receiving unit 520, an obtaining unit 530, a logon unit 540 and a feedback unit 550.

Wherein, the saving unit 510 is configured for saving a correspondence relationship between the temporary account information of each network registered in advance and the network domain name of each network, and saving resolvers corresponding to different types of clients in advance;
the receiving unit 520 is configured for receiving the network address of a network to be accessed provided by a user via a client;
the obtaining unit 530 is configured for obtaining the temporary account information of the network to be accessed corresponding to the network address according to the network address received by the receiving unit;
the logon unit 540 is configured for logging on the network to be accessed via the temporary account information obtained by the obtaining unit; and
the feedback unit 550 is configured for feeding the network page information after the logon unit logs on the network to be accessed back to the client.

Specifically, the obtaining unit 530 may include (not shown in Fig. 5):
a domain name resolving subunit, configured for resolving the network domain name of the network to be accessed from the network address received by the receiving unit, specifically, the domain name resolving subunit may be configured for determining the type of the client that provides the network address of the network to be accessed, selecting a resolver corresponding to the type of the client that is determined, resolving the network address via the resolver selected to obtain the network domain name of the network to be accessed; and
an information lookup unit, configured for looking up the temporary account information corresponding to the network domain name resolved by the domain name resolving subunit in the correspondence relationships saved in the saving unit.

Specifically, the logon unit 540 may include (not shown in Fig. 5):
an information writing subunit, configured for writing a temporary user name and a temporary password contained in the temporary account information obtained by the obtaining unit into the corresponding fields on the logon interface of the network to be accessed; and
a page receiving subunit, configured for receiving the network page information of the network to be accessed returned by the network to be accessed after confirming that logon is successful according to the temporary account information written by the information writing subunit.

Moreover, the application server may further include (not shown in Fig. 5):
a searching unit, configured for searching for a newly added network at a preset time interval;
The obtaining unit is further configured for obtaining the temporary account information registered on the newly added network found by the searching unit; and
the saving unit is further configured for saving a correspondence relationship between the temporary account information registered on the newly added network and the network domain name of the newly added network.

Referring to Fig. 6, it is a block diagram of a third embodiment of the application server for network access according to the invention.

The application server includes: a receiving unit 610, an obtaining unit 620, a logon unit 630, a feedback unit 640, a counting unit 650 and a sending unit 660.

Wherein, the receiving unit 610 is configured for receiving the network address of a network to be accessed provided by a user via a client;
the obtaining unit 620 is configured for obtaining the temporary account information of the network to be accessed corresponding to the network address according to the network address received by the receiving unit, and obtaining the user ID of the user;
the logon unit 630 is configured for logging on the network to be accessed via the temporary account information obtained by the obtaining unit;
the feedback unit 640 is configured for feeding the network page information after the logon unit logs on the network to be accessed back to the client;
the counting unit 650 is configured for increasing by 1 the count value of a counter generated for the user ID of the user in advance; and
the sending unit 660 is configured for sending a registration prompt information to the client of the user when the count value of the counter exceeds a preset threshold.

Specifically, the logon unit may include (not shown in Fig. 6):
an information writing subunit, configured for writing a temporary user name and a temporary password contained in the temporary account information obtained by the obtaining unit into the corresponding fields on the logon interface of the network to be accessed; and
a page receiving subunit, configured for receiving the network page information of the network to be accessed returned by the network to be accessed after confirming that logon is successful according to the temporary account information written by the information writing subunit.

Moreover, the application server may also include (not shown in Fig. 6):
a saving unit, configured for saving a correspondence relationship between the temporary account information of each network registered in advance and the network domain name of each network;

Correspondingly, the obtaining unit may include (not shown in Fig. 6):
a domain name resolving subunit, configured for resolving the network domain name of the network to be accessed from the network address received by the receiving unit; and
an information lookup unit, configured for looking up the temporary account information corresponding to the network domain name resolved by the domain name resolving subunit in the correspondence relationships saved in the saving unit.

Wherein, the saving unit is further configured for saving resolvers corresponding to different types of clients in advance;
Correspondingly, the domain name resolving subunit is specifically configured for determining the type of the client that provides the network address of the network to be accessed, selecting a resolver corresponding to the type of the client that is determined, resolving the network address via the resolver selected to obtain the network domain name of the network to be accessed.

Moreover, the application server may further include:
a searching unit, configured for searching for a newly added network at a preset time interval;

The obtaining unit is further configured for obtaining the temporary account information registered on the newly added network found by the searching unit; and
the saving unit is further configured for saving a correspondence relationship between the temporary account information registered on the newly added network and the network domain name of the newly added network.

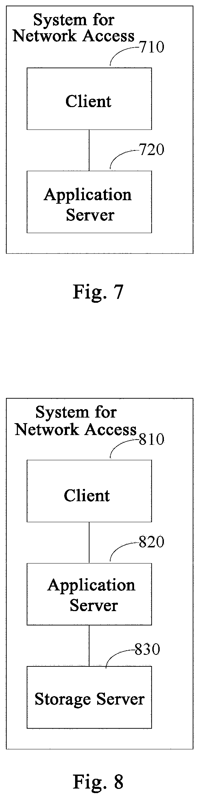

Referring to Fig. 7, it is a block diagram of a first embodiment of the system for network access according to the invention.

The system includes: a client 710 and an application server 720.

Wherein, the client 710 is configured for providing the network address of a network to be accessed by a user to the application server; and
the application server 720 is configured for obtaining the temporary account information of the network to be accessed corresponding to the network address according to the network address, logging on the network to be accessed via the temporary account information, and feeding the network page information after logging on the network to be accessed back to the client 710.

Wherein, the application server 720 is specifically configured for writing a temporary user name and a temporary password contained in the temporary account information into the corresponding fields on the logon interface of the network to be accessed, and receiving the network page information of the network to be accessed returned by the network to be accessed after confirming that logon is successful according to the temporary account information written in.

Moreover, the application server 710 is further configured for obtaining the user ID of the user, increasing by 1 the count value of a counter generated for the user ID of the user in advance after feeding the network page information after logging on the network to be accessed back to the client, and sending a registration prompt information to the client of the user when the count value of the counter exceeds a preset threshold.

Wherein, the client 710 may be clients that employ different operating systems.

Referring to Fig. 8, it is a block diagram of a second embodiment of a system for network access according to the invention.

The system includes: a client 810, an application server 820 and a storage server 830.

The storage server 830 is configured for saving a correspondence relationship between the temporary account information of each network registered in advance and the network domain name of each network;
the client 810 is configured for providing the network address of a network to be accessed by a user to the application server; and
the application server 820 is configured for resolving the network domain name of the network to be accessed from the network address, looking up in the correspondence relationships the temporary account information corresponding to the resolved network domain name, logging on the network to be accessed via the temporary account information, and feeding the network page information after logging on the network to be accessed back to the client.

Moreover, the storage server 830 is further configured for saving resolvers corresponding to different types of clients in advance;
The application server 820 is specifically configured for determining the type of the client that provides the network address of the network to be accessed, selecting a resolver corresponding to the type of the client that is determined, resolving the network address via the resolver selected, and obtaining the network domain name of the network to be accessed.

Moreover, the application server 820 is further configured for searching for a newly added network at a preset time interval, and obtaining the temporary account information registered on the newly added network;
The storage server 830 is further configured for saving a correspondence relationship between the temporary account information registered on the newly added network and the network domain name of the newly added network.

Moreover, the application server 820 is specifically configured for writing a temporary user name and a temporary password contained in the temporary account information into the corresponding fields on the logon interface of the network to be accessed, and receiving the network page information of the network to be accessed returned by the network to be accessed after confirming that logon is successful according to the temporary account information written in.

Moreover, the application server 820 is further configured for obtaining the user ID of the user, increasing by 1 the count value of a counter generated for the user ID of the user in advance after feeding the network page information after logging on the network to be accessed back to the client, and sending a registration prompt information to the client of the user when the count value of the counter exceeds a preset threshold.

Wherein, the client 810 may be clients that employ different operating systems.

It may be seen from the above embodiment that, the application server receives the network address of a network to be accessed provided by a user via a client, obtains the temporary account information of the network to be accessed corresponding to the network address according to the network address, logs on the network to be accessed via the temporary account information, and feeds the network page information after logging on the network to be accessed back to the client. In the embodiments of the invention, when a user accesses a network, on which the user is not registered, via a client, because the application server may obtain the temporary account information of the network to be accessed according to the network address, the application server may log on the network to be accessed in place of the user and feed back the network page information after logging on to the client, thereby it may be realized that a user accesses a network without registration; in comparison with the prior art, because a user does not need to register time after time when accessing different networks, user operation is simplified, and user experience is improved.

One skilled in the art may clearly understand that the technologies in the embodiments of the invention may be implemented by the aid of software and necessary universal hardware. Based on such an understanding, the essential part of the technical solutions in the embodiments of the invention, or in other words, the part that contributes to the prior art, may be embodied in the form of a software product that is stored in a storage medium, for example, ROM/RAM, magnetic disc or compact disc, etc., and includes several instructions that can make a computer device (which may be a personal computer, a server or a network device, etc.) implement the methods according to each embodiment of the invention or some part of the embodiments of the invention.

The embodiments in this specification are described in a stepped mode, and each embodiment focuses on the difference from other embodiments; for the same or similar part between each embodiment, reference may be made to each other. Especially, for a system embodiment, because it is basically similar to a method embodiment, the description thereof will be simple, and reference may be made to a part of the illustration of the method embodiment for the related part.

The present invention may, however, be embodied in different forms and should not be construed as limited to the embodiments set forth herein. In this specification, a detailed explanation of known related functions and constitutions may be omitted to avoid unnecessarily obscuring the subject manner of the present invention. In this specification, a singular form may include a plural form as long as it is not specifically mentioned. Furthermore, 'include/comprise' or'including/comprising' used in the specification represents that one or more components, steps, operations, and elements exist or are added.

The above embodiments of the invention will not limit the protection scope of the invention. All modifications, equivalent substitutions and improvements made within the principles of the invention will be construed as being within the protection scope of the invention.

## Claims

1. A method for network access, comprising:
allocating temporary account information for each network in advance, the temporary account information allocated in advance being registered by a provider of an application server in a manual mode;
saving a correspondence relationship between the temporary account information of the each network and a network domain name of the each network;
receiving a network address of a network to be accessed provided by a user via a client;
obtaining the temporary account information of the network to be accessed corresponding to the network address according to the network address and the correspondence relationship between the temporary account information of the each network and the network domain name of the each network;
logging on the network to be accessed via the temporary account information; and
feeding a network page information after logging on the network to be accessed back to the client.

2. The method according to claim 1, the obtaining the temporary account information of the network to be accessed corresponding to the network address according to the network address and the correspondence relationship between the temporary account information of the each network and the network domain name of the each network further comprising:
resolving the network domain name of the network to be accessed from the network address; and
looking up, in the correspondence relationships, the temporary account information corresponding to the resolved network domain name.

3. The method according to claim 2, further comprising:
saving resolvers corresponding to different types of clients in advance;
the resolving the network domain name of the network to be accessed from the network address comprises:
determining the type of the client that provides the network address of the network to be accessed;
selecting a resolver corresponding to the type of the client that is determined;
resolving the network address via the resolver selected to obtain the network domain name of the network to be accessed.

4. The method according to claim 2, wherein, the number of the temporary account informations of each network registered in advance is at least one.

5. The method according to any one of claims 2 to 4, further comprising:
searching for a newly added network at a preset time interval;
obtaining the temporary account information registered on the newly added network; and
saving a correspondence relationship between the temporary account information registered on the newly added network and a network domain name of the newly added network.

6. The method according to claim 1, wherein, the logging on the network to be accessed via the temporary account information comprises:
writing a temporary user name and a temporary password contained in the temporary account information into the corresponding fields on the logon interface of the network to be accessed; and
receiving the network page information of the network to be accessed returned by the network to be accessed after confirming that logon is successful according to the temporary account information written in.

7. The method according to claim 1, wherein, after the receiving the network address of a network to be accessed provided by a user via a client, the method further comprises: obtaining a user ID of the user;
after the feeding the network page information after logging on the network to be accessed back to the client, the method further comprises:
increasing by 1 a count value of a counter generated for the user ID of the user in advance; and
sending a registration prompt information to the client of the user when the count value of the counter exceeds a preset threshold.

8. An application server for network access, wherein, the application server comprises:
a configuration unit, configured for allocating temporary account information for each network in advance, the temporary account information allocated in advance being registered by a provider of an application server in a manual mode;
a saving unit (510), configured for saving a correspondence relationship between the temporary account information of the each network and a network domain name of the each network;
a receiving unit (520), configured for receiving a network address of a network to be accessed provided by a user via a client;
an obtaining unit (530), configured for obtaining a temporary account information of the network to be accessed corresponding to the network address according to the network address received by the receiving unit and the correspondence relationship between the temporary account information of the each network and the network domain name of the each network;
a logon unit (540), configured for logging on the network to be accessed via the temporary account information obtained by the obtaining unit; and
a feedback unit (550), configured for feeding a network page information after the logon unit logs on the network to be accessed back to the client.

9. The application server according to claim 8, wherein;
the obtaining unit (520) comprises:
a domain name resolving subunit, configured for resolving the network domain name of the network to be accessed from the network address received by the receiving unit; and
an information lookup unit, configured for looking up the temporary account information corresponding to the network domain name resolved by the domain name resolving subunit in the correspondence relationships saved in the saving unit.

10. The application server according to claim 9, wherein:
the saving unit (510) is further configured for saving resolvers corresponding to different types of clients in advance; and
the domain name resolving subunit is specifically configured for determining the type of the client that provides the network address of the network to be accessed, selecting a resolver corresponding to the type of the client that is determined, resolving the network address via the resolver selected to obtain the network domain name of the network to be accessed.

11. The application server according to claim 9 or 10, further comprising:
a searching unit, configured for searching for a newly added network at a preset time interval;
the obtaining unit (520) is further configured for obtaining the temporary account information registered on the newly added network found by the searching unit; and
the saving unit (510) is further configured for saving a correspondence relationship between the temporary account information registered on the newly added network and the network domain name of the newly added network.

12. The application server according to claim 8, wherein, the logon unit comprises:
an information writing subunit, configured for writing a temporary user name and a temporary password contained in the temporary account information obtained by the obtaining unit into the corresponding fields on the logon interface of the network to be accessed;and
a page receiving subunit, configured for receiving the network page information of the network to be accessed returned by the network to be accessed after confirming that logon is successful according to the temporary account information written by the information writing subunit.

13. The application server according to claim 8, wherein, the obtaining unit (520) is further configured for obtaining a user ID of the user;
the application server further comprises:
a counting unit, configured for increasing by 1 a count value of a counter generated for the user ID of the user in advance; and
a sending unit, configured for sending a registration prompt information to the client of the user when the count value of the counter exceeds a preset threshold.

14. A system for network access, wherein, the system comprises: a storage server (830), a client (810) and an application server (820);
the storage server (830) is configured for saving a correspondence relationship between temporary account information allocated for each network and a network domain name of each network, the temporary account information allocated for each network being registered by a provider of an application server (820) in a manual mode;
the client (810) is configured for providing a network address of a network to be accessed by a user to the application server; and
the application server (820) is configured for obtaining a temporary account information of the network to be accessed corresponding to the network address according to the network address, logging on the network to be accessed via the temporary account information, and feeding a network page information after logging on the network to be accessed back to the client.

15. The system according to claim 14, wherein
the application server (820) is specifically configured for resolving the network domain name of the network to be accessed from the network address, and looking up, in the correspondence relationships, the temporary account information corresponding to the resolved network domain name.

16. The system according to claim 15, wherein:
the storage server (830) is further configured for saving resolvers corresponding to different types of clients in advance; and
the application server is specifically configured for determining the type of the client that provides the network address of the network to be accessed, selecting a resolver corresponding to the type of the client that is determined, resolving the network address via the resolver selected to obtain the network domain name of the network to be accessed.

17. The system according to claim 15 or 16, wherein:
the application server (820) is further configured for searching for a newly added network at a preset time interval, and obtaining the temporary account information registered on the newly added network; and
the storage server (830) is further configured for saving a correspondence relationship between the temporary account information registered on the newly added network and the network domain name of the newly added network.

18. The system according to claim 14, wherein:
the application server (820) is specifically configured for writing a temporary user name and a temporary password contained in the temporary account information into the corresponding fields on the logon interface of the network to be accessed, and receiving the network page information of the network to be accessed returned by the network to be accessed after confirming that logon is successful according to the temporary account information written in.

19. The system according to claim 14, wherein:
the application server (820) is further configured for obtaining a user ID of the user, and increasing by 1 the count value of a counter generated for the user ID of the user in advance after feeding the network page information after logging on the network to be accessed back to the client, and sending a registration prompt information to the client of the user when the count value of the counter exceeds a preset threshold.

20. The system according to claim 14, wherein, the client (810) may be clients that employ different operating systems.

## Patentansprüche

1. Netzzugangsverfahren, umfassend:
Zuordnung von temporären Kontoinformationen für jedes Netz im Voraus, wobei die im Voraus zugeordneten temporären Kontoinformationen von einem Provider eines Anwendungs-Servers in einem manuellen Modus registriert werden;
Speicherung einer Entsprechungsbeziehung zwischen den temporären Kontoinformationen des jeden Netzes und einem Netzdomänennamen des jeden Netzes;
Empfang einer von einem Anwender durch einen Client bereitgestellten Netzadresse eines Netzes, auf das zugegriffen werden soll;
Gewinnung der temporären Kontoinformationen des der Netzadresse entsprechenden Netzes, auf das zugegriffen werden soll, gemäß der Netzadresse und der Entsprechungsbeziehung zwischen den temporären Kontoinformationen des jeden Netzes und dem Netzdomänennamen des jeden Netzes;
Anmeldung des Netzes, auf das zugegriffen werden soll, durch die temporären Kontoinformationen; und
Rückübertragung einer Netzseiteninformation nach Anmeldung des Netzes, auf das zugegriffen werden soll, an den Client.

2. Verfahren gemäß Anspruch 1, wobei die Gewinnung der temporären Kontoinformationen des der Netzadresse entsprechenden Netzes, auf das zugegriffen werden soll, gemäß der Netzadresse und der Entsprechungsbeziehung zwischen den temporären Kontoinformationen des jeden Netzes und dem Netzdomänennamen des jeden Netzes ferner Folgendes umfasst:
Auflösung des Netzdomänennamens des Netzes, auf das zugegriffen werden soll, aus der Netzadresse; und
Nachschlagen der temporären Kontoinformationen, die dem aufgelösten Netzdomänennamen entsprechen, in den Entsprechungsbeziehungen.

3. Verfahren gemäß Anspruch 2, ferner umfassend:
Speicherung von Resolvern, die verschiedenen Client-Typen entsprechen, im Voraus;
die Auflösung des Netzdomänennamens des Netzes, auf das zugegriffen werden soll, aus der Netzadresse umfasst:
Bestimmung des Typs des Client, der die Netzadresse des Netzes, auf das zugegriffen werden soll, bereitstellt;
Auswahl eines dem bestimmten Client-Typ entsprechenden Resolvers;
Auflösung der durch den Resolver ausgewählten Netzadresse, um den Netzdomänennamens des Netzes, auf das zugegriffen werden soll, zu gewinnen.

4. Verfahren gemäß Anspruch 2, wobei die Anzahl der temporären Kontoinformationen jedes im Voraus registrierten Netzes mindestens eins beträgt.

5. Verfahren gemäß einem der Ansprüche 2 bis 4, ferner umfassend:
Suche nach einem neu hinzugekommenen Netz in einem vorgegebenen Zeitraum;
Gewinnung der auf dem neu hinzugekommenen Netz registrierten temporären Kontoinformationen; und
Speicherung einer Entsprechungsbeziehung zwischen den temporären Kontoinformationen des neu hinzugekommenen Netzes und einem Netzdomänennamen des neu hinzugekommenen Netzes.

6. Verfahren gemäß Anspruch 1, wobei die Anmeldung des Netzes, auf das zugegriffen werden soll, durch die temporären Kontoinformationen Folgendes umfasst:
Schreiben eines temporären Anwendernamens und eines in den temporären Kontoinformationen enthaltenen temporären Passworts in die entsprechenden Felder auf der Anmeldungsschnittstelle des Netzes, auf das zugegriffen werden soll; und
Empfang der von dem Netz, auf das zugegriffen werden soll, zurückübertragenen Netzseiteninformationen des Netzes, auf das zugegriffen werden soll, nach Bestätigung, dass die Anmeldung gemäß den eingeschriebenen temporären Kontoinformationen erfolgreich ist.

7. Verfahren gemäß Anspruch 1, wobei das Verfahren nach Empfang der von einem Anwender durch einen Client bereitgestellten Netzadresse eines Netzes, auf das zugegriffen werden soll, ferner Folgendes umfasst:
Gewinnung einer Anwender-ID des Anwenders;
nach Rückübertragung der Netzseiteninformationen nach Anmeldung des Netzes, auf das zugegriffen werden soll, an den Client umfasst das Verfahren ferner:
Erhöhung eines Zählwertes eines für die Anwender-ID des Anwenders im Voraus erzeugten Zählers um 1; und
Senden einer Registrieraufforderungsinformation an den Client des Anwenders, wenn der Zählwert des Zählers eine vorgegebene Schwelle überschreitet.

8. Anwendungs-Server für einen Netzzugriff, wobei der Anwendungs-Server Folgendes umfasst:
eine Konfigurationseinheit, die dafür konfiguriert ist, temporäre Kontoinformationen für jedes Netz im Voraus zuzuordnen, wobei die im Voraus zugeordneten temporären Kontoinformationen von einem Provider eines Anwendungs-Servers in einem manuellen Modus registriert werden;
eine Speichereinheit (510), die dafür konfiguriert ist, eine Entsprechungsbeziehung zwischen den temporären Kontoinformationen des jeden Netzes und einem Netzdomänennamen des jeden Netzes zu speichern;
eine Empfangseinheit (520), die dafür konfiguriert ist, eine von einem Anwender durch einen Client bereitgestellte Netzadresse eines Netzes, auf das zugegriffen werden soll, zu empfangen;
eine Gewinnungseinheit (530), die dafür konfiguriert ist, eine temporäre Kontoinformation des der Netzadresse entsprechenden Netzes, auf das zugegriffen werden soll, gemäß der von der Empfangseinheit empfangenen Netzadresse und der Entsprechungsbeziehung zwischen den temporären Kontoinformationen des jeden Netzes und dem Netzdomänennamen des jeden Netzes zu gewinnen;
eine Anmeldungseinheit (540), die dafür konfiguriert ist, das Netz, auf das zugegriffen werden soll, durch die von der Gewinnungseinheit gewonnenen temporären Kontoinformationen anzumelden; und
eine Rückübertragungseinheit (550), die dafür konfiguriert ist, eine Netzseiteninformation an den Client zurückzuübertragen, nachdem die Anmeldungseinheit das Netz, auf das zugegriffen werden soll, angemeldet hat.

9. Anwendungs-Server gemäß Anspruch 8, wobei die Gewinnungseinheit (530) Folgendes umfasst:
eine Domänennamenauflösungs-Untereinheit, die dafür konfiguriert ist, den Netzdomänennamen des Netzes, auf das zugegriffen werden soll, aus der von der Empfangseinheit empfangenen Netzadresse aufzulösen; und
eine Informationsnachschlageeinheit, die dafür konfiguriert ist, die temporären Kontoinformationen, die dem von der Domänennamenauflösungs-Untereinheit aufgelösten Netzdomänennamen entsprechen, in den in der Speichereinheit gespeicherten Entsprechungsbeziehungen nachzuschlagen.

10. Anwendungs-Server gemäß Anspruch 9, wobei
die Speichereinheit (510) ferner dafür konfiguriert ist, Resolver, die verschiedenen Client-Typen entsprechen, im Voraus zu speichern; und
die Domänennamenauflösungs-Untereinheit ist speziell dafür konfiguriert, den Typ des Client zu bestimmen, der die Netzadresse des Netzes, auf das zugegriffen werden soll, bereitstellt, einen dem bestimmten Client-Typ entsprechenden Resolver auszuwählen, die Netzadresse durch den ausgewählten Resolver aufzulösen, um den Netzdomänennamen des Netzes, auf das zugegriffen werden soll, zu gewinnen.

11. Anwendungs-Server gemäß Anspruch 9 oder 10, ferner umfassend:
eine Sucheinheit, die dafür konfiguriert ist, nach einem neu hinzugekommenen Netz in einem vorgegebenen Zeitraum zu suchen;
die Gewinnungseinheit (520) ist ferner dafür konfiguriert, die auf dem von der Sucheinheit gefundenen neu hinzugekommenen Netz registrierten temporären Kontoinformationen zu gewinnen; und
die Speichereinheit (510) ist ferner dafür konfiguriert, eine Entsprechungsbeziehung zwischen den auf dem neu hinzugekommenen Netz registrierten temporären Kontoinformationen und dem Netzdomänennamen des neu hinzugekommenen Netzes zu speichern.

12. Anwendungs-Server gemäß Anspruch 8, wobei die Anmeldungseinheit Folgendes umfasst:
eine Informationsschreib-Untereinheit, die dafür konfiguriert ist, einen temporären Anwendernamen und ein temporäres Passwort, die in den von der Gewinnungseinheit gewonnenen temporären Kontoinformationen enthalten sind, in die entsprechenden Felder auf der Anmeldungsschnittstelle des Netzes, auf das zugegriffen werden soll, zu schreiben; und
eine Seitenempfangs-Untereinheit, die dafür konfiguriert ist, die Netzseiteninformationen des Netzes, auf das zugegriffen werden soll, die von dem Netz, auf das zugegriffen werden soll, zurückübertragen wurden, nach Bestätigung, dass die Anmeldung gemäß den von der Informationsschreib-Untereinheit geschriebenen temporären Kontoinformationen erfolgreich ist, zu empfangen.

13. Anwendungs-Server gemäß Anspruch 8, wobei die Gewinnungseinheit (520) ferner dafür konfiguriert ist, eine Anwender-ID des Anwenders zu gewinnen; der Anwendungs-Server umfasst ferner Folgendes:
eine Zähleinheit, die dafür konfiguriert ist, einen Zählwert eines für die Anwender-ID des Anwenders im Voraus erzeugten Zählers um 1 zu erhöhen; und
eine Sendeeinheit, die dafür konfiguriert ist, eine Registrieraufforderungsinformation an den Client des Anwenders zu senden, wenn der Zählwert des Zählers eine vorgegebene Schwelle überschreitet.

14. Netzzugangssystem, wobei das System Folgendes umfasst:
einen Speicher-Server (830), einen Client (810) und einen Anwendungs-Server (820);
der Speicher-Server (830) ist dafür konfiguriert, eine Entsprechungsbeziehung zwischen den jedem Netz zugeordneten temporären Kontoinformationen und einem Netzdomänennamen jedes Netzes zu speichern, wobei die jedem Netz zugeordneten temporären Kontoinformationen von einem Provider eines Anwendungs-Servers (820) in einem manuellen Modus registriert werden;
der Client (810) ist dafür konfiguriert, dem Anwendungs-Server eine Netzadresse eines Netzes, auf das zugegriffen werden soll, durch einen Anwender bereitzustellen; und
der Anwendungs-Server (820) ist dafür konfiguriert, eine temporäre Kontoinformation des der Netzadresse entsprechenden Netzes, auf das zugegriffen werden soll, gemäß der Netzadresse zu gewinnen, das Netz, auf das zugegriffen werden soll, durch die temporären Kontoinformationen anzumelden und nach Anmeldung des Netzes, auf das zugegriffen werden soll, eine Netzseiteninformation an den Client zurückzuübertragen.

15. System gemäß Anspruch 14, wobei
der Anwendungs-Server (820) speziell dafür konfiguriert ist, den Netzdomänennamen des Netzes, auf das zugegriffen werden soll, aus der Netzadresse aufzulösen und die dem aufgelösten Netzdomänennamen entsprechenden temporären Kontoinformationen in den Entsprechungsbeziehungen nachzuschlagen.

16. System gemäß Anspruch 15, wobei
der Speicher-Server (830) ferner dafür konfiguriert ist, Resolver, die verschiedenen Client-Typen entsprechen, im Voraus zu speichern; und
der Anwendungs-Server ist speziell dafür konfiguriert, den Typ des Client zu bestimmen, der die Netzadresse des Netzes, auf das zugegriffen werden soll, bereitstellt, einen dem bestimmten Client-Typ entsprechenden Resolver auszuwählen, die Netzadresse durch den ausgewählten Resolver aufzulösen, um den Netzdomänennamen des Netzes, auf das zugegriffen werden soll, zu gewinnen.

17. System gemäß Anspruch 15 oder 16, wobei
der Anwendungs-Server (820) ferner dafür konfiguriert ist, in einem vorgegebenen Zeitraum nach einem neu hinzugekommenen Netz zu suchen und die auf dem neu hinzugekommenen Netz registrierten temporären Kontoinformationen zu gewinnen; und
der Speicher-Server (830) ist ferner dafür konfiguriert, eine Entsprechungsbeziehung zwischen den auf dem neu hinzugekommenen Netz registrierten temporären Kontoinformationen des neu hinzugekommenen Netzes und dem Netzdomänennamen des neu hinzugekommenen Netzes zu speichern.

18. System gemäß Anspruch 14, wobei
der Anwendungs-Server (820) speziell dafür konfiguriert ist, einen temporären Anwendernamen und ein in den temporären Kontoinformationen enthaltenes Passwort in die entsprechenden Felder auf der Anmeldungsschnittstelle des Netzes, auf das zugegriffen werden soll, zu schreiben und die von dem Netz, auf das zugegriffen werden soll, zurückübertragenen Netzseiteninformationen des Netzes, auf das zugegriffen werden soll, nach Bestätigung, dass die Anmeldung gemäß den eingeschriebenen temporären Kontoinformationen erfolgreich ist, zu empfangen.

19. System gemäß Anspruch 14, wobei
der Anwendungs-Server (820) ferner dafür konfiguriert ist, eine Anwender-ID des Anwenders zu gewinnen und nach Rückübertragung der Netzseiteninformationen nach Anmeldung des Netzes, auf das zugegriffen werden soll,
an den Client, den Zählwert eines für die Anwender-ID des Anwenders im Voraus erzeugten Zählers um 1 zu erhöhen und eine Registrieraufforderungsinformation an den Client des Anwenders zu senden, wenn der Zählwert des Zählers eine vorgegebene Schwelle überschreitet.

20. System gemäß Anspruch 14, wobei der Client (810) aus Clients bestehen kann, die unterschiedliche Betriebssysteme verwenden.

## Revendications

1. Procédé d'accès à un réseau, comprenant:
l'affectation d'informations temporaires de compte pour chaque réseau par avance, les informations temporaires de compte affectées par avance étant enregistrées par un fournisseur d'un serveur d'applications dans un mode manuel;
la mémorisation d'une relation de correspondance entre les informations temporaires de compte de ce chaque réseau et un nom de domaine de réseau de ce chaque réseau;
la réception d'une adresse de réseau d'un réseau à accéder, fournie par un utilisateur par l'intermédiaire d'un client;
l'obtention des informations temporaires de compte du réseau à accéder correspondant à l'adresse de réseau, selon l'adresse de réseau et la relation de correspondance entre les informations temporaires de compte de ce chaque réseau et le nom de domaine de réseau de ce chaque réseau;
la connexion du réseau à accéder par l'intermédiaire des informations temporaires de compte; et
le retour d'informations de page de réseau après connexion du réseau à accéder, au client.

2. Procédé selon la revendication 1, dans lequel l'obtention des informations temporaires de compte du réseau à accéder correspondant à l'adresse de réseau, selon l'adresse de réseau et la relation de correspondance entre les informations temporaires de compte de ce chaque réseau et le nom de domaine de réseau de ce chaque réseau comprend en outre:
la résolution du nom de domaine de réseau du réseau à accéder à partir de l'adresse de réseau; et
la consultation, dans les relations de correspondance, des informations temporaires de compte correspondant au nom de domaine de réseau résolu.

3. Procédé selon la revendication 2, comprenant en outre:
la mémorisation de résolveurs correspondant à des types de client différents, par avance;
la résolution du nom de domaine de réseau du réseau à accéder à partir de l'adresse de réseau comprend:
la détermination du type du client qui fournit l'adresse de réseau du réseau à accéder;
la sélection d'un résolveurs correspondant au type de client déterminé;
la résolution de l'adresse de réseau sélectionnée par l'intermédiaire du résolveur, pour obtenir le nom de domaine de réseau du réseau à accéder.

4. Procédé selon la revendication 2, dans lequel le nombre des informations temporaires de compte de chaque réseau enregistré par avance est au moins un.

5. Procédé selon l'une quelconque des revendications 2 à 4, comprenant en outre:
la recherche d'un réseau nouvellement joint dans un intervalle de temps prédéfini;
l'obtention des informations temporaires de compte enregistrées sur le réseau nouvellement joint; et
la mémorisation d'une relation de correspondance entre les informations temporaires de compte du réseau enregistrées sur le réseau nouvellement joint et un nom de domaine de réseau du réseau nouvellement joint.

6. Procédé selon la revendication 1, dans lequel la connexion du réseau à accéder par l'intermédiaire des informations temporaires de compte comprend:
l'inscription d'un nom d'utilisateur temporaire et d'un mot de passe temporaire contenus dans les informations temporaires de compte, dans les champs correspondants sur l'interface de connexion du réseau à accéder; et
la réception des informations de page de réseau du réseau à accéder retournées par le réseau à accéder, après la confirmation que la connexion est couronnée de succès d'après les informations temporaires de compte inscrites.

7. Procédé selon la revendication 1, dans lequel, après réception de l'adresse de réseau d'un réseau à accéder, fournie par un utilisateur par l'intermédiaire d'un client, le procédé comprend en outre:
l'obtention d'un ID utilisateur de l'utilisateur;
après retour des informations de page de réseau après connexion du réseau à accéder, au client, le procédé comprend en outre:
l'augmentation d'une valeur de compte d'un compteur généré par avance pour l'ID utilisateur de l'utilisateur, par 1; et
l'émission d'une information d'appel d'enregistrement au client de l'utilisateur, lorsque la valeur de compte du compteur excède une valeur seuil prédéfinie.

8. Serveur d'applications d'accès à un réseau, dans lequel le serveur d'applications comprend:
une unité de configuration configurée pour affecter des informations temporaires de compte pour chaque réseau par avance, les informations temporaires de compte affectées par avance étant enregistrées par un fournisseur d'un serveur d'applications dans un mode manuel;
une unité de mémorisation (510) configurée pour mémoriser une relation de correspondance entre les informations temporaires de compte du chaque réseau et un nom de domaine de réseau du chaque réseau;
une unité de réception (520) configurée pour recevoir une adresse de réseau d'un réseau à accéder, fournie par un utilisateur par l'intermédiaire d'un client;
une unité d'obtention (530) configurée pour obtenir une information temporaire de compte du réseau à accéder correspondant à l'adresse de réseau selon l'adresse de réseau reçue par l'unité de réception et la relation de correspondance entre les informations temporaires de compte du chaque réseau et le nom de domaine de réseau du chaque réseau;
une unité de connexion (540) configurée pour connecter le réseau à accéder par l'intermédiaire des informations temporaires de compte obtenues par l'unité d'obtention; et
une unité de retour (550) configurée pour retourner une information de page de réseau au client, après connexion du réseau à accéder par l'unité de connexion.

9. Serveur d'applications selon la revendication 8, dans lequel l'unité d'obtention (530) comprend:
une sous-unité de résolution de nom de domaine configurée pour résoudre le nom de domaine de réseau du réseau à accéder à partir de l'adresse de réseau reçue par l'unité de réception; et
une unité de consultation d'informations configurée pour consulter les informations temporaires de compte correspondant au nom de domaine de réseau résolu par la sous-unité de résolution de nom de domaine dans les relations de correspondance mémorisées dans l'unité de mémorisation.

10. Serveur d'applications selon la revendication 9, dans lequel
l'unité de mémorisation (510) est configurée en outre pour mémoriser des résolveurs correspondant à des types de client différents, par avance; et
la sous-unité de résolution de nom de domaine est configurée spécifiquement pour déterminer le type du client qui fournit l'adresse de réseau du réseau à accéder, pour sélectionner un résolveur correspondant au type de client déterminé, pour résoudre l'adresse de réseau par l'intermédiaire du résolveur sélectionné, afin d'obtenir le nom de domaine de réseau du réseau à accéder.

11. Serveur d'applications selon la revendication 9 ou 10, comprenant en outre:
une unité de recherche configurée pour chercher un réseau nouvellement joint dans un intervalle de temps prédéfini;
l'unité d'obtention (520) est configurée en outre pour obtenir les informations temporaires de compte enregistrées sur le réseau nouvellement joint, trouvé par l'unité de recherche; et
l'unité de mémorisation (510) est configurée en outre pour mémoriser une relation de correspondance entre les informations temporaires de compte enregistrées sur le réseau nouvellement joint et le nom de domaine de réseau du réseau nouvellement joint.

12. Serveur d'applications selon la revendication 8, dans lequel l'unité de connexion comprend:
une sous-unité d'inscription d'informations configurée pour inscrire un nom d'utilisateur temporaire et un mot de passe temporaire contenus dans les informations temporaires de compte obtenues par l'unité d'obtention, dans les champs correspondants sur l'interface de connexion du réseau à accéder; et
une sous-unité de réception de pages configurée pour recevoir les informations de page de réseau du réseau à accéder, retournées par le réseau à accéder, après la confirmation que la connexion est couronnée de succès d'après les informations temporaires de compte inscrites par la sous-unité d'inscription d'informations.

13. Serveur d'applications selon la revendication 8, dans lequel l'unité d'obtention (520) est configurée en outre pour obtenir un ID utilisateur de l'utilisateur;
le serveur d'applications comprend en outre:
une unité de comptage configurée pour augmenter une valeur de compte d'un compteur généré par avance pour l'ID utilisateur de l'utilisateur, par 1; et
une unité d'émission configurée pour émettre une information d'appel d'enregistrement au client de l'utilisateur, lorsque la valeur de compte du compteur excède une valeur seuil prédéfinie.

14. Système d'accès à un réseau, dans lequel le système comprend:
un serveur de mémorisation (830), un client (810) et un serveur d'applications (820);
le serveur de mémorisation (830) est configuré pour mémoriser une relation de correspondance entre les informations temporaires de compte et un nom de domaine de réseau de chaque réseau, les informations temporaires de compte affectées à chaque réseau étant enregistrées par un fournisseur d'un serveur d'applications (820) dans un mode manuel;
le client (810) est configuré pour fournir au serveur d'applications une adresse de réseau d'un réseau à accéder par un utilisateur; et
le serveur d'applications (820) est configuré pour obtenir une information temporaire de compte du réseau à accéder correspondant à l'adresse de réseau, selon l'adresse de réseau, pour connecter le réseau à accéder par l'intermédiaire des informations temporaires de compte et pour retourner une information de page de réseau au client, après connexion du réseau à accéder.

15. Système selon la revendication 14, dans lequel
le serveur d'applications (820) est spécifiquement configuré pour résoudre le nom de domaine de réseau du réseau à accéder à partir de l'adresse de réseau et pour consulter les informations temporaires de compte correspondants au nom de domaine de réseau résolu, dans les relations de correspondance.

16. Système selon la revendication 15, dans lequel
le serveur de mémorisation (830) est configuré en outre pour mémoriser des résolveurs correspondant à des types de client différents, par avance; et le serveur d'applications est configuré spécifiquement pour déterminer le type du client qui fournit l'adresse de réseau du réseau à accéder, pour sélectionner un résolveur correspondant au type de client déterminé, pour résoudre l'adresse de réseau par l'intermédiaire du résolveur sélectionné, afin d'obtenir le nom de domaine de réseau du réseau à accéder.

17. Système selon la revendication 15 ou 16, dans lequel
le serveur d'applications (820) est configuré en outre pour chercher un réseau nouvellement joint dans un intervalle de temps prédéfini et pour obtenir les informations temporaires de compte enregistrées sur le réseau nouvellement joint; et
le serveur de mémorisation (830) est configuré en outre pour mémoriser une relation de correspondance entre les informations temporaires de compte egistrées sur le réseau nouvellement joint et le nom de domaine de réseau du réseau nouvellement joint.

18. Système selon la revendication 14, dans lequel
le serveur d'applications (820) est configuré spécifiquement pour inscrire un nom d'utilisateur temporaire et un mot de passe temporaire contenus dans les informations temporaires de compte, dans les champs correspondants sur l'interface de connexion du réseau à accéder et pour recevoir les informations de page de réseau du réseau à accéder retournées par le réseau à accéder, après la confirmation que la connexion est couronnée de succès d'après les informations temporaires de compte inscrites.

19. Système selon la revendication 14, dans lequel
le serveur d'applications (820) est configuré en outre pour obtenir un ID utilisateur de l'utilisateur et pour augmenter une valeur de compte d'un compteur généré par avance pour l'ID utilisateur de l'utilisateur, par 1, après le retour des informations de page de réseau après connexion du réseau, au client, et pour émettre une information d'appel d'enregistrement au client de l'utilisateur, lorsque la valeur de compte du compteur excède une valeur seuil prédéfinie.

20. Système selon la revendication 14, dans lequel le client (810) peut se composer de clients utilisant des systèmes d'exploitation différents.
